# EUROPEAN PATENT APPLICATION

(11) **EP 4 450 275 A1**
(43) Date of publication of application: **23.10.2024**
(21) Application number: 23382371.5
(22) Date of filing: 21.04.2023
(51) Int. Cl.: B32B 7/12, C09J 5/06, C09J 5/08, C09J 133/08, C09J 133/10

(54) **TRIM PANEL FOR VEHICLES AND PROCESS FOR MANUFACTURING THEREOF**

(71) Applicant: Grupo Antolin-Ingenieria, S.A., 09007 Burgos (ES); Agencia Estatal Consejo Superior de Investigaciones Cientificas, M.P., 28006 Madrid (ES)
(72) Inventor: GALLEGO CASTRO, Raúl, 09007 Burgos (ES); CASTILLO GARCÍA, Marta, 09007 Burgos (ES); ANTÓN LARA, Araceli, 09007 Burgos (ES); DE JUAN SAIZ, Luis Miguel, 09007 Burgos (ES); VERDEJO MÁRQUEZ, Raquel, 28006 Madrid (ES); LÓPEZ MANCHADO, Miguel Ángel, 28006 Madrid (ES)
(74) Representative: Capitán García, Maria Nuria

(57) **Abstract**

Trim panel for vehicles comprising at least two sheets being joined to each other by a removable thermoplastic adhesive having a low viscosity during its application process due to the fact that it comprises a first part not polymerized, a second part polymerized and a thermal radical initiator. According to a second state wherein the adhesive is solid, the first part is polymerized and the adhesive is removable by the application of a chemical solvent.

## Description

### TECHNICAL FIELD OF THE INVENTION

The present invention relates to a trim panel for vehicles which comprises at least two sheets being joined to each other by a removable thermoplastic adhesive having a low viscosity during its application process.

Additionally, the invention relates to a manufacturing process for this trim panel.

### BACKGROUND OF THE INVENTION

A trim panel is a decorative part covering the vehicle bodywork which normally is formed by superposing two or more sheets that are joined to each other and are formed by applying heat and/or pressure.

Thus, a trim panel has a mainly aesthetic function among other functions.

In order to improve the comfort of the vehicle occupant, a trim panel can have other functions linked to a particular sheet or to a particular element incorporated to the trim panel such as acoustic function, electrical function or other.

To fulfil the above mentioned functions it is necessary to ensure a proper joining throughout the entire contact surface between the different sheets forming the trim panel being said joining reliable and durable over its service life.

In this regard it is necessary to achieve a good distribution of the joining means responsible to said joining to obtain a good adherence between the different sheets.

On the other hand, trim panels have to be adapted to the shape of the vehicle bodywork which can comprise complex three dimensional shapes. Therefore, the joining between the different sheets must remain reliable and durable despite said complex geometry of the trim panel. The distribution of the joining means for these cases is of particular importance.

In addition, for the sake of economy it is convenient that the amount of joining means can be adjusted to the strict minimum to achieve said reliable and durable joining.

In this regard, it is also desirable that joining means are easily applied, that is the processes and tooling used to apply the joining means are the commonly used to manufacture the trim panels not requiring special tooling for this task.

Another very important point related to trim panels is their recyclability.

As stated above, normally trim panels comprise several sheets of different materials joined each other. Thus, to turn recycled materials into valuable reusable materials it is necessary to separate the different sheets forming the trim panel.

Preferably, the challenge in this case is how to separate the different sheets forming the trim panel and at the same time keeping the integrity of said sheets and avoiding any remains of the joining means in any of the sheets forming the trim panel.

Additionally, it would be desirable to recover the joining means for subsequent use.

Therefore, from a recycling point of view it is desirable that joining means additionally allow the separation of the different sheets for subsequent use of both, the sheets and the joining means according to an easy and economical way.

Normally the joining means used to connect the different sheets forming the trim panel are adhesives.

Depending on their solidification mechanisms adhesives can be thermosets or thermoplastics.

Thermoset adhesives are cross-linked networks formed by a chemical reaction during a curing process. This curing process irreversibly change the structure of the adhesive.

These adhesives are often liquids at room temperature. Thus, due to its low viscosity thermoset adhesives are easily applied even in the case when the surface where they are applied comprises three dimensional complex shapes. In addition, its low viscosity allows a good distribution of the adhesive ensuring a good adherence and at the same time it allows optimizing the amount of adhesive applied.

Additionally, the processes and tooling used to apply thermoset adhesives are the commonly used to manufacture trim panels not requiring special tooling for their application. Thus, the whole process for manufacturing the trim panel is simple and economical.

A disadvantage of this kind of adhesives which structure is irreversibly changed during the curing process is the fact that the separation of the different sheets forming the trim panel is only possible by weakening the structure of the cured adhesive in such a way that it is possible to tear it in order to separate the sheets adhered. This results in the difficulty to avoid adhesive remains in the different sheets separated and in the impossibility to recover the adhesive for subsequent use.

JP2005132022 is an example to illustrate the above described application comprising the use of thermoset adhesives. According to this, the thermoset adhesive comprises a gas generating agent that generates gas when stimulated. Once the generated gas is released, the sheets can be peeled off because the adhesive strength is reduced.

Thermoplastic adhesives are made of long-chain polymers formed by the combination of smaller molecules called monomers during a polymerization process that rely on polymer chain entanglement to resist mechanical loads. They do not undergo a curing process.

These adhesives are solids at room temperature. Therefore, in order to be used as joining means they have to be melted by heat application. Once they become solid again the joining between the sheets is established.

Despite the application of heat to melt thermoplastic adhesive, its viscosity still remains very high being far short from the viscosity of the thermoset adhesive during the application process.

This high viscosity makes difficult to achieve a good distribution of the adhesive on the corresponding sheet, being this difficulty worse when the surface where the adhesive is applied comprises three dimensional complex shapes. In addition, its high viscosity makes difficult to optimize the amount of adhesive applied.

Additionally, the application of this kind of adhesives requires the use of special tooling to melt the adhesive during its application on the corresponding surface. Thus, the whole process for manufacturing the trim panel is more complex and expensive than those using thermoset adhesives.

Due to the fact that this kind of thermoplastic adhesives can be re-melted, it is possible to carry out the separation of the different sheets forming the trim panel upon heat application. However, it is not possible to avoid adhesive remains in the different sheets forming the trim panel and at the same time keeping the integrity of the different sheets forming the trim panel.

In addition to the joining means above described based on adhesives as such, it is known the use of the manufacturing process of the trim panel in combination with the chemical affinity of the materials forming the different sheets to establish the joining between them. One common example is the injection molding process used for manufacturing trim panels wherein the combination of the pressure and the temperature of the injection process in combination with the chemical affinity of the materials involved establishes a reliable and durable joining between the sheets.

The main advantage of this process is the fact that it avoids using any kind of adhesive provided that the materials involved have chemical affinity. In the case they have not said chemical affinity they can be coated with materials providing this property.

The main disadvantage of this kind of joining is the impossibility to separate the different sheets forming the trim panel and at the same time keeping the integrity of them, being this inconvenient particularly relevant in the cases where the materials forming the different sheets are different between them and/or they also comprise electrical components such as circuits formed by electrical conductive inks or electronic components as in the case of In-Mold Electronics (IME) processes.

Therefore and according to a recycling point of view, this process is very disadvantaged.

In view of the disadvantages mentioned above, the object of the invention is a trim panel for vehicles which comprises at least two sheets being joined to each other by an adhesive having a low viscosity during its application process being easily applied even in the case when the surface where it is applied comprises three dimensional complex shapes, allowing a good distribution of the adhesive and consequently ensuring a good adherence between the sheets and at the same time optimizing the amount of adhesive applied. Additionally, the processes and tooling used to apply the adhesive being the commonly used to manufacture trim panels not requiring special tooling for its application and the adhesive allowing the separation of the different sheets forming the trim panel for subsequent use of both, the sheets and the adhesive, according to an easy and economical way.

### DESCRIPTION OF THE INVENTION

The present invention is defined and characterised by the independent claims, while the dependent claims describe additional features thereof.

Due to the fact that during the application process of the thermoplastic adhesive, it comprises a first part not polymerized and a second part polymerized comprising a particular ratio, it is possible to obtain a very low viscosity at room temperature. Thus, it is possible the application of the thermoplastic acrylic resin of the invention in the same way as a thermoset adhesive is applied.

It means that it is possible to apply it easily even in the case when the surface where they are applied comprises three dimensional complex shapes.

In addition, its low viscosity allows a good distribution of the adhesive ensuring a good adherence and at the same time it allows optimizing the amount of adhesive applied.

Additionally, the processes and tooling used to apply the adhesive of the invention having a low viscosity avoids using special tooling for its application, being only necessary the common tooling used to manufacture a common trim panel. Thus, the whole process for manufacturing the trim panel is simple and economical.

Due to the very similar solubility parameters of the chemical solvent used to remove the adhesive and said adhesive, that is the thermoplastic acrylic resin, it is possible to dissolve the thermoplastic acrylic resin in that chemical solvent in order to separate the different sheets connected by said adhesive and forming the trim panel very easily.

It allows keeping the integrity of said sheets and avoiding any remains of the adhesive in any of the sheets. Thus, it is possible the subsequent use of said sheets.

In addition, it is possible to separate the adhesive from the dissolution by evaporation, recovering completely said adhesive for its subsequent use.

Therefore, from a recycling point of view the trim panel of the invention is very advantageous due to the fact that it is possible to turn the recycled materials obtained, namely the different sheets and the adhesive, into valuable reusable materials according to an easy and economical way.

The optional case in which the adhesive further comprises a foaming agent is particularly advantageous due to the fact that it allows the adhesive is better embedded inside the sheets it connects, improving in this way the adherence of the adhesive and consequently the joining between sheets.

The optional case in which the monomer forming the adhesive according to the first state is isobornyl methacrylate (IBMA) is particularly advantageous due to the fact that the emission of volatile compounds is reduced during the polymerization process.

### DESCRIPTION OF THE DRAWINGS

The present specification is complemented by a set of figures that illustrate a preferred embodiment, in no way limiting the invention.
Figure 1 shows a perspective view of a trim panel for vehicles according to an embodiment of the invention, particularly a roof trim.
Figure 2 shows a schematic cross-sectional view of the trim panel comprising two sheets according to the plane AA represented in the figure 1.
Figure 3 shows a perspective view of a trim panel for vehicles according to another embodiment of the invention, particularly a portion of any interior or exterior trim having an electrical function.
Figure 4 shows a schematic cross-sectional view of the trim panel comprising three sheets according to the plane BB represented in the figure 3.

### DETAILED DESCRIPTION OF THE INVENTION

The trim panel (10) of the invention can be any trim panel having an aesthetic function and covering any interior or exterior bodywork part of the vehicle.

In case the trim panel (10) covers an internal bodywork part of the vehicle it can be a door trim, a pillar trim, a dashboard trim, a central console trim, a floor carpet, a roof trim, a sunvisor, or a portion of any of them.

In case the trim panel (10) covers an exterior bodywork part of the vehicle it can be a door exterior trim, a pillar exterior trim, or a portion of any of them.

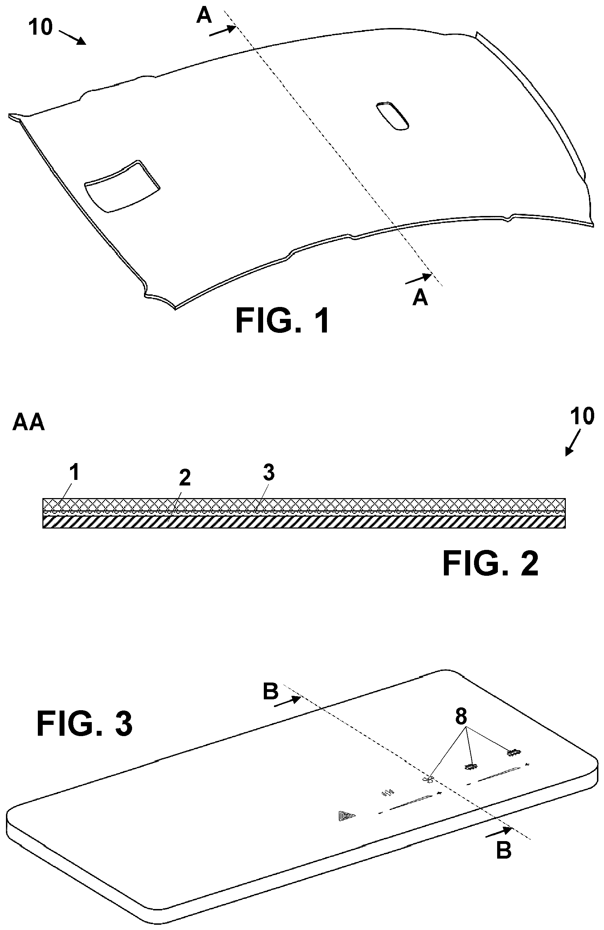

Particularly figures 1 and 2 show an embodiment of the invention where the trim panel (10) is a roof trim.

As figure 2 shows, according to this embodiment the trim panel (10) comprises a first sheet (1), a second sheet (2) and a first adhesive layer (3) between the first sheet (1) and the second sheet (2) joining them together.

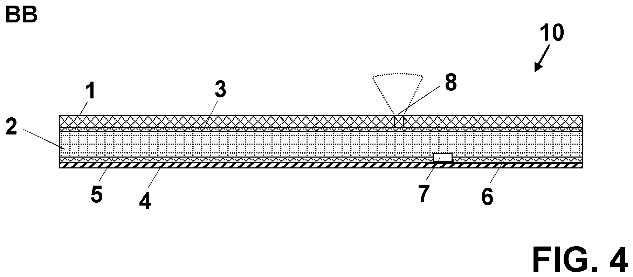

Particularly figures 3 and 4 show another embodiment of the invention where the trim panel (10) can be a portion of any interior or exterior trim. According to this particular application the trim panel (10) has an electrical function in addition to the aesthetic function.

As figure 4 shows, according to this embodiment the trim panel (10) further comprises a third sheet (4) and a second adhesive layer (5) between the second sheet (2) and the third sheet (4) joining them together.

Optionally, according to an embodiment not represented the trim panel (10) can comprise more sheets forming the structure of the trim panel (10) and more adhesive layers connecting said sheets between them. It will depend on the particular application.

Optionally, the trim panel (10) can comprise other joining means for connecting some of the sheets or other components between them, having said joining means other features different from the above described regarding the first and second adhesive layers (3, 5) of the invention.

The first sheet (1), the second sheet (2), the third sheet (4) or any additional sheet forming the trim panel (10) can be any sheet forming the trim panel (10) such as a decorative covering having an aesthetic function and which in turn can comprise a film, a fabric, a non-woven fabric, a leather, a cork foil, a wood veneer, a metal foil, a stone foil, etc. or any combination of them; a sheet forming the substrate of the trim panel (10) having a structural function which in turn can comprise a reinforcing sheet, a foam sheet, a plastic supporting sheet, etc. or any combination of them; other sheets having a particular additional function such as an electrical function and which in turn can comprise an electrical component such as an electrical circuit and additionally electronic components such as light sources, sensors, antennas, chips, etc., or an optical function and which in turn can comprise a light guide sheet, a light diffusing sheet, a light reflecting sheet, a light absorbing sheet, a light masking sheet, etc. or any combination of them.

Likewise, the sheets (1, 2, 4) forming the trim panel (10) can be transparent, translucent or opaque.

In case a sheet is translucent it can comprise additives for light diffusing.

In the case a sheet is opaque it can comprise predefined windows (8) being transparent or translucent areas or even openings which allow passing light through them, as the ones represented in figures 3 and 4.

Said predefined windows (8) define a pictogram. The pictogram can be any figurative or symbolic drawing used for communication purposes, including alphanumeric characters.

Said sheets (1, 2, 4) or any of them, can be a laminate formed by several layers.

In addition, said sheets (1, 2, 4) can comprise other functional components in order to provide additional functions to the trim panel (10).

Said functional components can be an electrical component such as an electrical circuit or an electronic component.

Particularly the electrical circuit can be provided as an extra part attached to the corresponding sheet (1, 2, 4) or as an integral part deposited directly to the corresponding sheet (1, 2, 4) by an additive process such as printing with electrical conductive inks or other electrical conductive material.

Particularly the electronic components can comprise light sources, sensors, antennas, chips, etc., being said components provided as an extra part attached to the circuit, as for example by using electrical conductive adhesives or pastes, or as an integral part deposited directly on the corresponding circuit.

In addition, said sheets (1, 2, 4) can perform more than one function, for example a structural function and a particular additional function such as an electrical function or an optical function or for example an aesthetic function and a particular additional function such as an electrical function or an optical function, or for example an electrical function and an optical function. Other functions not mentioned are also considered by the invention.

For example, according to the embodiment represented in figures 1 and 2 comprising two sheets (1, 2) and a first adhesive layer (3) connecting them, the first sheet (1) can be a decorative sheet comprising any of the options above described, and the second sheet (2) can be a sheet forming the substrate of the trim panel (10) having a structural function according to any of the options above described.

For example, according to the embodiment represented in figures 3 and 4 comprising three sheets, a first sheet (1), a second sheet (2) and a third sheet (4); and a first adhesive layer (3) and a second adhesive layer (5) connecting them, the first sheet (1) can be a decorative sheet comprising any of the options above described. Particularly in this case, the first sheet (1) can be an opaque sheet having predefined windows (8) in order to allow the light pass through them according to the options above described.

Additionally, this first sheet (1) can comprise an electrical function for example due to the fact that it comprises an electrical component such as an electrical circuit or an electronic component (not represented) such as light sources, sensors, antennas, chips, or other.

According to this example, the second sheet (2) can be a sheet forming the substrate of the trim panel (10) having a structural function and an optical function, particularly acting as a light guide. Particularly in this case, the second sheet (2) can be a plastic transparent or translucent sheet in order to allow the light coming from the light source (7) pass through it and optionally to allow said light is distributed within this second sheet before reaching the predefined windows (8) of the first sheet (1).

The third sheet (4) according to this example can be a sheet having an electrical function. Particularly, it can be a film or other sheet acting as a support:
- for an electrical circuit (6), which in turn can be an extra part attached to the sheet or it can be an integral part deposited directly to the sheet by an additive process such as printing with electrical conductive inks or other electrical conductive material; and
- for electronic components attached to said electrical circuit such as a light source (7) being a LED. Additionally, it can comprise more light sources, sensors, antennas, chips, or other (not represented). Said components can be provided as an extra part by using for example electrical conductive adhesives or pastes to attach them to the circuit (6), or as an integral part deposited directly on the circuit (6).

Additionally, said third sheet (4) can perform an optical function such as a light reflecting function or other in order to improve efficiency of the light emitted by the light source (7). This function can be provided by applying a particular coating by printing or other technology to said third sheet (4) or by the particular properties of the third sheet (4) by itself.

The adhesive forming the first adhesive layer (3), the second adhesive layer (5) or any other further adhesive layer comprises a thermoplastic acrylic resin.

Particularly, the adhesive forming said adhesive layers (3, 5) comprises a first state corresponding to its application process, that is when the adhesive is applied on any of the sheets (1, 2, 4) in order to carry out the subsequent joining between said sheets, and a second state corresponding to the state when the adhesive has become solid and the joining between the sheets involved is consolidated, that is, when the adhesive is connecting the different sheets between them.

According to the first state, the adhesive comprises a first part not polymerized and a second part polymerized; wherein the ratio first part not polymerized:second part polymerized is in the range from 90:10 to 70:30 and it has a dynamic viscosity in the range from 5 to 200000 cPs measured with a Brookfield viscometer at a temperature between 20 and 30 °C and rotational speed of 200 rpm.

The second part polymerized comprises a polymer. Particularly the polymer can be selected from the group poly(methyl methacrylate) (PMMA), Poly(ethyl methacrylate) (PEMA), poly(isopropyl methacrylate) (PiPMA), poly(Isobornyl methacrylate (PIBMA)), t-butyl methacrylate (PtBMA), butyl methacrylate (PtBMA), ethylene acrylate (PEA), hydroxyethyl methacrylate (pHEMA), and trimethylolpropane triacrylate (pTMPTA), or any combination thereof.

The first part not polymerized comprise a monomer. Particularly the monomer can be selected from the group methyl methacrylate (MMA), ethyl methacrylate, isopropyl methacrylate, Isobornyl methacrylate (IBMA), t-butyl methacrylate, butyl methacrylate, ethylene acrylate, hydroxyethyl methacrylate, and trimethylolpropane triacrylate, or any combination thereof.

In addition, according to the first state the adhesive further comprises a thermal radical initiator in order to promote the polymerization process of the first part not polymerized at the second state.

The thermal radical initiator can be selected from the group benzoyl peroxide (PB), methyl ethyl ketone peroxide (PMEK), cumyl hydroperoxide (CHP) and azobisisobutyronitrile (AIBN).

Preferably the weight ratio percentage of the thermal radical initiator is in the range between 0.5 and 3%.

Optionally, according to the first state the adhesive can further comprise a foaming agent. The weight ratio percentage of the foaming agent is in the range between 0.1 and 15%. The foaming agent can be selected for example from the group azodicarbonamide, 4,4'-Oxy-bis(benzenesulfonyl hydrazide), citric acid, sodium bicarbonate or expandable microspheres.

According to the second state the first part forming the adhesive is polymerized due to the thermal radical initiator and temperature. As the second part has already been polymerized, at this second stage the whole adhesive is polymerized.

Optionally, according to the first state, the adhesive can further comprise tackifiers in order to improve the adherence with the sheets forming the trim in the particular cases when the adhesive has not chemical affinity with any of the sheets involved.

Said tackifiers can be for example a resin selected from the group of rosins and their derivates, terpenes and modified terpenes, aliphatic, cycloaliphatic and aromatic resins (C5 aliphatic resins, C9 aromatic resins, and C5/C9 aliphatic/aromatic resins), hydrogenated hydrocarbon resins, and their mixtures, terpene-phenol resins (TPR, used often with ethylene-vinyl acetate adhesives)), novolacs.

The weight ratio percentage of the tackifiers and the particular tackifiers resin chose will depend on the particular materials forming the sheets involved.

According to this second state the adhesive is removable by the application of a chemical solvent having a Hildebrand solubility parameter δ₁ being in the range between 18 and 27 MPa^{1/2}.

Particularly, the chemical solvent comprises a material selected from the group acetone, acetonitrile (AcN)+4-heptanone (Hna)^{a)}, tetrahydrofuran (THF), acetonitrile (AcN)+Isopentyl acetate (iPac)^{a)}, acetonitrile (AcN)+Pentylacetate(Pac)^{a)}, acetonitrile (AcN)+1-Chlorobutane (BuCl)^{a)}, acetonitrile (AcN)+Carbon tetrachloride (CCl₄)^{a)}, acetonitrile (AcN)+Isopentyl alcohol (iPOH)^{a)}, acetonitrile (AcN)+Pentyl alcohol (POH)^{a)}, acetonitrile (AcN)+1-Butanol (BuOH)^{a)}, acetonitrile (AcN)+Isopropyl alcohol (iPrOH)^{a)}, Formamide (FA)+Ethanol (EtOH)^{a)}, 1-Chlorobutane (BuCl)+Isopentyl alcohol (iPOH)^{a)}, 1-Chlorobutane (BuCl)+Pentyl alcohol (POH)^{a)}, 1-Chlorobutane (BuCl)+ 2-Butanol (sBuOH)^{b)}, 1-Chlorobutane (BuCl)+Isopropyl alcohol (iPrOH)^{a)}, Carbon tetrachloride (CCl₄)+1-Butanol (BuOH)^{c)}, Carbon tetrachloride (CCl₄)+Ethanol (EtOH)^{c)}, Carbon tetrachloride (CCl₄)+Methanol (MeOH)^{c)} .

Additionally, the present invention relates to the manufacturing process of the trim panel (10) for vehicles.

It comprises the following steps:
a) providing a first sheet (1) inside a mold having a shape according to the shape of the trim panel (10) for vehicles.

This first sheet (1) can be any sheet which commonly form part of a trim panel (10) for vehicles such as a decorative covering having an aesthetic function and which in turn can comprise a film, a fabric, a non-woven fabric, a leather, a cork foil, a wood veneer, a metal foil, a stone foil, etc. or any combination of them; a sheet forming the substrate of the trim panel (10) having a structural function which in turn can comprise a reinforcing layer, a foam layer, a plastic supporting layer, etc. or any combination of them; other sheets having a particular additional function such as an electrical function and which in turn can comprise a circuit or electrical components or an optical function and which in turn can comprise a light guide sheet, a light diffusing sheet, a light reflecting sheet, a light absorbing sheet, a light masking sheet, etc or any combination of them.

Likewise, the first sheet (1) can be transparent, translucent or opaque. In the case it is opaque it can comprise predefined windows (8) being transparent or translucent areas or even openings which allow passing light through them, as the ones represented in figures 3 and 4.

Said predefined windows (8) can be provided on the first sheet (1) before or after it is introduced inside the mold.

Optionally, first sheet (1) can be a laminate formed by several layers.

The first sheet (1) can be introduced inside the mold as a previous existing sheet or it can be created inside the mold, as in the case of an injection molding process.

In the case the first sheet (1) is introduced inside the mold as a previous existing sheet, it can comprise a three dimensional shape due to the fact that it is pre-formed before it is introduced inside the mold or it can comprise a substantially flat shape.

Said pre-forming process can be carried out for example by thermoforming or by cold forming.

In addition, before first sheet (1) is introduced inside the mold, it can comprise other functional components in order to provide additional functions to the trim panel (10).

Said functional components can be an electrical component such as an electrical or an electronic component.

Particularly, the electrical circuit, can be provided as an extra part attached to the first sheet (1) or as an integral part deposited directly to the first sheet (1) by an additive process such as printing with electrical conductive inks or other electrical conductive material.

Particularly, the electronic components can be light sources, sensors, antennas, chips, etc., being said components provided as an extra part attached to the circuit, as for example by using electrical conductive adhesives or pastes, or as an integral part deposited directly on said circuit or on the first sheet (1).

Likewise, said functional components, namely the circuit and the electrical components can be independently provided on the first sheet (1) before or after the pre-forming process above mentioned by which it acquires a three dimensional shape.

For example, both the circuit and the electrical components can be provided on the first sheet (1) before preforming, the circuit can be provided on the first sheet (1) before preforming and the electrical components can be provided on the first sheet (1) after preforming or both the circuit and the electrical components can be provided on the first sheet (1) after preforming.

In the case the first sheet (1) is created inside the mold, as in the case of an injection molding process, the material forming the first sheet (1) can be transparent, translucent or transparent comprising additives for light diffusing, in the case that this layer provides an optical function; or the first sheet (1) can be opaque.
b) Providing a second sheet (2) inside the mold.

The second sheet (2) can comprise all technical features described above regarding the first sheet (1) which for the sake of brevity are not repeated again.

Optionally a third sheet (4) and optionally other further sheets can be provided inside the mold. Said third sheet (4) and the further sheets can comprise all technical features described above regarding the first sheet (1) which for the sake of brevity are not repeated again.
c) applying a first layer (3) of an adhesive on the first sheet (1) and/or on the second sheet (2), said adhesive being a thermoplastic acrylic resin comprising a first part not polymerized and a second part polymerized and a thermal radical initiator, wherein the ratio first part not polymerized: second part polymerized is in the range from 90:10 to 70:30 and it has a dynamic viscosity in the range between from 5 to 200000 cPs measured with a Brookfield viscometer at a temperature between 20 and 30 °C and rotational speed of 200 rpm.

The second part polymerized comprises a polymer. Particularly the polymer can be selected from the group poly(methyl methacrylate) (PMMA), Poly(ethyl methacrylate) (PEMA), poly(isopropyl methacrylate) (PiPMA), poly(Isobornyl methacrylate (PIBMA)),, t-butyl methacrylate (PtBMA), butyl methacrylate (PtBMA), ethylene acrylate (PEA), hydroxyethyl methacrylate (pHEMA), and trimethylolpropane triacrylate (pTMPTA), or any combination thereof.

The first part not polymerized comprise a monomer. Particularly the monomer can be selected from the group methyl methacrylate (MMA), ethyl methacrylate, isopropyl methacrylate, Isobornyl methacrylate (IBMA), t-butyl methacrylate, butyl methacrylate, ethylene acrylate, hydroxyethyl methacrylate, and trimethylolpropane triacrylate, or any combination thereof.

As it is mentioned above, the adhesive further comprises a thermal radical initiator in order to promote the polymerization process of the first part not polymerized subsequently.

The thermal radical initiator can be selected from the group benzoyl peroxide (PB), methyl ethyl ketone peroxide (PMEK), cumyl hydroperoxide (CHP) and azobisisobutyronitrile (AIBN).

The weight ratio percentage of the thermal radical initiator is in the range between 0.5 and 3%.

Optionally, the adhesive can further comprise a foaming agent. The weight ratio percentage of the foaming agent is in the range between 0.1-15%. The foaming agent can be selected for example from the group azodicarbonamide, 4,4'-Oxy-bis(benzenesulfonyl hydrazide), citric acid, sodium bicarbonate or expandable microspheres.

Optionally, the adhesive can further comprise tackifiers in order to improve the adherence with the sheets forming the trim in the particular cases when the adhesive has not chemical affinity with any of the sheets involved.

Said tackifiers can be for example a resin selected from the group of rosins and their derivates, terpenes and modified terpenes, aliphatic, cycloaliphatic and aromatic resins (C5 aliphatic resins, C9 aromatic resins, and C5/C9 aliphatic/aromatic resins), hydrogenated hydrocarbon resins, and their mixtures, terpene-phenol resins (TPR, used often with ethylene-vinyl acetate adhesives)), novolacs.

The weight ratio percentage of the tackifiers and the particular tackifiers resin chose will depend on the particular materials forming the sheets involved.

Particularly, the adhesive can be applied on the first sheet (1) and /or the second sheet (2).

If the trim panel (10) comprises a third sheet (4) or other further sheets, a second adhesive layer (5) or further adhesive layers can be likewise applied on any of said sheets.

In the case in which one of the sheets (1, 2, 4) is created inside of the mold as explained above, the adhesive is applied on the other sheet or sheets introduced inside the mold before it is closed to form the trim panel (10).

In addition, the adhesive can be applied on the sheets (1, 2, 4) before or after said layers are introduced inside the mold.

The application of the adhesive can be carry out by different methods. In order to optimize the tooling and the manufacturing process itself the application of the adhesive depends on the particular trim panel (10) to be manufactured which in turn conditioned the particular manufacturing process chosen for manufacturing thereof.

Thus, the adhesive can be applied for example by screen-printing, by inkjet printing, by flexographic, by rotogravure, by transfer, by spraying or by rollers.
d) polymerizing the first part not polymerized obtaining a first part polymerized by the application of a temperature between 50 and 140 °C.

Polymerization means a process in which relatively small molecules, called monomers, combine chemically to produce a long-chain or network molecule, called polymer.

This process is produced due to the combination of the thermal radical initiator and the particular range of temperatures above mentioned.

In order to reach the temperature necessary for polymerizing the first part not polymerized, said process according to an embodiment of the invention can be carried out inside an injection mold due to the temperature of the material injected to form one of the sheets forming the trim panel (10).

Thus, being the first sheet (1) inside the injection mold and optionally, other sheets having an adhesive layer, the mold is closed and the material for configuring the second sheet (2) is injected inside the mold.

Upon the injected material contacts the first adhesive layer (3), the polymerization process of the first part not polymerized is carried out. Optionally, the polymerization process of further adhesive layers being inside the mold can be carried out, for example, in the case that the second sheet (2) is introduced between a first sheet (1) and a third sheet (4).

According to another embodiment, said polymerization process can be carried out inside a thermoforming mold. In this case the temperature necessary for carrying out the thermoforming process of the trim panel (10) can be obtained either by an oven being adjacent to the thermoforming mold or by the own mold comprising heating means.

Thus, being said first sheet (1) with the first adhesive layer (3) and the second sheet (2) inside the thermoforming mold and optionally, other sheets having an adhesive layer, the mold is closed and by the effect of the temperature obtained by said mold or previously by an adjacent oven, the polymerization process of the first part not polymerized is carried out.
e) solidifying both the first part polymerized in step d) and the second part polymerized obtaining a solid adhesive layer in order to establish the joining between the first sheet (1) and the second sheet (2).

This step is necessary in order to consolidate the joining of the different sheets due to the effect of the thermoplastic acrylic resin forming the adhesive of the different adhesive layers (3, 5) forming the trim panel (10) .

The solid adhesive layer obtained in the step d) is removable by the application of a chemical solvent having a Hildebrand solubility parameter δ1 being in the range between 18 and 27 MPa^{1/2}.

Said chemical solvent comprises a material selected from the group acetone, tetrahydrofuran (THF), acetonitrile (AcN)+4-heptanone (Hna)^{a)}, acetonitrile (AcN)+Isopentyl acetate (iPac)^{a)}, acetonitrile (AcN)+Pentylacetate(Pac)^{a)}, acetonitrile (AcN)+1-Chlorobutane (BuCl)^{a)}, acetonitrile (AcN)+Carbon tetrachloride (CCl₄)^{a)}, acetonitrile (AcN)+Isopentyl alcohol (iPOH)^{a)}, acetonitrile (AcN)+Pentyl alcohol (POH)^{a)}, acetonitrile (AcN)+1-Butanol (BuOH)^{a)}, acetonitrile (AcN)+Isopropyl alcohol (iPrOH)^{a)}, Formamide (FA)+Ethanol (EtOH)^{a)}, 1-Chlorobutane (BuCl)+Isopentyl alcohol (iPOH)^{a)}, 1-Chlorobutane (BuCl)+Pentyl alcohol (POH)^{a)}, 1-Chlorobutane (BuCl)+ 2-Butanol (sBuOH)^{b)}, 1-Chlorobutane (BuCl)+Isopropyl alcohol (iPrOH)^{a)}, Carbon tetrachloride (CCl₄)+1-Butanol (BuOH)^{c)}, Carbon tetrachloride (CCl₄)+Ethanol (EtOH)^{c)}, Carbon tetrachloride (CCl₄)+Methanol (MeOH)^{c)} .

Thus, by immersing the trim panel (10) for vehicles the thermoplastic acrylic resin is dissolved in said chemical solvent forming a dissolution.

Thus, it is possible to completely remove the adhesive from the sheets forming the trim keeping the integrity of said different sheets (1, 2, 4).

Then, it is possible to separate the adhesive from the dissolution formed by evaporation, recovering completely the adhesive and the chemical solvent.

According to an embodiment steps a), b), d) and e) of the manufacturing process of the invention are carried out by an injection molding process inside a common injection mold. Optionally according to this embodiment, step c) can be carried out inside the common injection mold.

According to another embodiment steps a), b) and d) of the manufacturing process of the invention are carried out by a thermoforming process inside a common thermoforming mold. Optionally according to this embodiment, steps c) and/or e) can be carried out inside the common thermoforming mold.

## Claims

1. Trim panel (10) for vehicles comprising:
• a first sheet (1),
• a second sheet (2),
• a first adhesive layer (3) comprising an adhesive and being between the first sheet (1) and the second sheet (2) joining them together,
**characterized in that**
the adhesive comprises a thermoplastic acrylic resin, said adhesive comprises a first state corresponding to its application process and a second state corresponding to the state wherein the adhesive is solid,
according to the first state:
• the adhesive comprises a first part not polymerized, a second part polymerized and a thermal radical initiator, wherein the ratio first part not polymerized:second part polymerized is in the range from 90:10 to 70:30, wherein the weight ratio percentage of the thermal radical initiator is in the range between 0.5 and 3% and the adhesive has a dynamic viscosity in the range from 5 to 200000 cPs measured with a Brookfield viscometer at a temperature between 20 and 30 °C and rotational speed of 200 rpm and,
according to the second state:
• the first part forming the adhesive is polymerized
• the adhesive is removable by the application of a chemical solvent having a Hildebrand solubility parameter δ₁ being in the range between 18 and 27 MPa^{1/2}.

2. Trim panel (10) for vehicles according to claim 1 wherein the first sheet (1) is a decorative sheet.

3. Trim panel (10) for vehicles according to claims 1 or 2 wherein the second sheet (2) is a sheet forming the substrate of the trim panel (10) having a structural function.

4. Trim panel (10) for vehicles according to any claim 1 to 3 wherein the second sheet (2) is a light guide having an optical function.

5. Trim panel (10) for vehicles according to any claim 1 to 4 wherein the trim panel (10) further comprises a third sheet (4) attached to the second sheet (2) by a second adhesive layer (5) comprising an adhesive having the features of claim 1.

6. Trim panel (10) for vehicles according to claim 1 wherein the first sheet (1) comprises an electrical component.

7. Trim panel (10) for vehicles according to claim 5 wherein the third sheet (1) comprises an electrical component.

8. Trim panel (10) for vehicles according to claim 1 wherein the first part not polymerized comprises a monomer selected from the group methyl methacrylate (MMA), ethyl methacrylate, isopropyl methacrylate, Isobornyl methacrylate (IBMA), t-butyl methacrylate, butyl methacrylate, ethylene acrylate, hydroxyethyl methacrylate, and trimethylolpropane triacrylate, or any combination thereof.

9. Trim panel (10) for vehicles according to claim 1 wherein the second part polymerized comprises a polymer selected from the group poly(methyl methacrylate) (PMMA), Poly(ethyl methacrylate) (PEMA), poly(isopropyl methacrylate) (PiPMA), poly(Isobornyl methacrylate (PIBMA)), t-butyl methacrylate (PtBMA), butyl methacrylate (PtBMA), ethylene acrylate (PEA), hydroxyethyl methacrylate (pHEMA), and trimethylolpropane triacrylate (pTMPTA), or any combination thereof.

10. Trim panel (10) for vehicles according to claim 1 wherein the thermal radical initiator is selected from the group benzoyl peroxide (PB), methyl ethyl ketone peroxide (PMEK), cumyl hydroperoxide (CHP) and azobisisobutyronitrile (AIBN).

11. Trim panel (10) for vehicles according to claim 1 wherein the adhesive further comprises a foaming agent wherein the weight ratio percentage of the foaming agent is in the range between 0.1 and 15%.

12. Trim panel (10) for vehicles according to claim 1 wherein the chemical solvent comprises a material selected from the group acetone, acetonitrile (AcN)+4-heptanone (Hna)^{a)}, tetrahydrofuran (THF), acetonitrile (AcN)+Isopentyl acetate (iPac)^{a)}, acetonitrile (AcN)+Pentylacetate(Pac)^{a)}, acetonitrile (AcN)+1-Chlorobutane (BuCl)^{a)}, acetonitrile (AcN)+Carbon tetrachloride (CCl₄)^{a)}, acetonitrile (AcN)+Isopentyl alcohol (iPOH)^{a)}, acetonitrile (AcN)+Pentyl alcohol (POH)^{a)}, acetonitrile (AcN)+1-Butanol (BuOH)^{a)}, acetonitrile (AcN)+Isopropyl alcohol (iPrOH)^{a)}, Formamide (FA)+Ethanol (EtOH)^{a)}, 1-Chlorobutane (BuCl)+Isopentyl alcohol (iPOH)^{a)}, 1-Chlorobutane (BuCl)+Pentyl alcohol (POH)^{a)}, 1-Chlorobutane (BuCl)+ 2-Butanol (sBuOH)^{b)}, 1-Chlorobutane (BuCl)+Isopropyl alcohol (iPrOH)^{a)}, Carbon tetrachloride (CCl₄)+1-Butanol (BuOH)^{c)}, Carbon tetrachloride (CCl₄)+Ethanol (EtOH)^{c)}, Carbon tetrachloride (CCl₄)+Methanol (MeOH)^{c)} .

13. Process for manufacturing a trim panel (10) for vehicles according to claim 1 comprising the following steps:
a) providing a first sheet (1) inside a mold having a shape according to the shape of the trim panel (10) for vehicles,
b) providing a second sheet (2) inside the mold,
c) applying a first adhesive layer (3) on the first sheet (1) and/or on the second sheet (2), said first adhesive layer (3) comprising an adhesive being a thermoplastic acrylic resin comprising a first part not polymerized, a second part polymerized and a thermal radical initiator, wherein the ratio first part not polymerized:second part polymerized is in the range from 90:10 to 70:30, wherein the weight ratio percentage of the thermal radical initiator is in the range between 0.5 and 3% and the adhesive has a dynamic viscosity in the range between from 5 to 200000 cPs measured with a Brookfield viscometer at a temperature between 20 and 30 °C and rotational speed of 200 rpm,
d) polymerizing the first part not polymerized obtaining a first part polymerized by the application of a temperature between 50 and 140°C and in the presence of the thermal radical initiator,
e) solidifying both the first part polymerized in step d) and the second part polymerized obtaining a solid adhesive layer in order to establish the joining between the first sheet (1) and the second sheet (2) in such a way that,
the solid adhesive forming the first adhesive layer (3) obtained is removable by the application of a chemical solvent having a Hildebrand solubility parameter δ₁ being in the range between 18 and 27 MPa^{1/2}.

14. Process for manufacturing a trim panel (10) for vehicles according to claim 13 wherein steps a), b), d) and e) are carried out by an injection molding process inside a common injection mold.

15. Process for manufacturing a trim panel (10) for vehicles according to claim 13 wherein the step c) is carried out by screen-printing, spraying, inkjet printing, rotogravure printing, flexography printing, transfer printing, by spraying or by rollers.
